# EUROPEAN PATENT SPECIFICATION

(11) **EP 3 388 229 B1**
(45) Date of publication and mention of the grant of the patent: **14.07.2021**
(21) Application number: 18166368.3
(22) Date of filing: 09.04.2018
(51) Int. Cl.: B32B 5/02, B32B 7/12, B32B 9/02, B32B 27/12, B32B 27/36

(54) **BREAKABLE FILM FOR CAPSULES WITH EXTRACTABLE SUBSTANCES AND CAPSULE SEALED WITH SUCH FILM**
ZERBRECHLICHER FILM FÜR KAPSELN MIT EXTRAHIERBAREN SUBSTANZEN UND KAPSEL VERSIEGELT MIT SOLCHEM FILM
FILM CASSABLE POUR CAPSULES AVEC DES SUBSTANCES EXTRACTIBLES ET DE LA CAPSULE SCELLÉE AVEC FILM DE TELLE SORTE

(30) Priority: 11.04.2017 IT 201700039800
(43) Date of publication of application: 17.10.2018
(73) Proprietor: Corapack S.R.L., 22040 Brenna (CO) (IT)
(72) Inventor: RADICE, Massimo, 22040 Brenna (CO) (IT); RADICE, Fabrizio, 22040 Brenna (CO) (IT)
(74) Representative: Faggioni, Carlo Maria

(56) References cited:
- WO-A1-2015/121489
- WO-A1-2015/162632

## Description

### Field of the invention

The present invention relates to a film for sealing a capsule for extractable substances, in particular a film of rupturable material.

### Prior state of the art

The need to be able offer capsules for extractable substances on the market, in particular coffee capsules, which are substantially compostable, has been long felt.

In fact, capsules for extractable substances - i.e., capsules to be inserted in extraction machines with pressurized liquid - are traditionally composed of a main cup-shaped body, typically made of aluminium or low-cost plastic materials, and a pierceable sealing film, typically made of a more fragile material such as an aluminium foil. This type of construction is very effective in terms of performance/costs. However, the huge spread of extraction systems, particularly for coffee, has considerably increased the number of capsules produced and used in the market, creating significant disposal problems. In fact, the simultaneous presence of very different materials, such as the organic residue of the material originating the drink (e.g. ground coffee), the metal foil and the plastic or metal body, are incompatible with each other in terms of feasibility of a separate waste collection and, therefore, a recycling.

To partially solve this problem, partially compostable capsules have been offered on the market. In particular, the cup-shaped body of the capsule has been produced with degradable plastic materials which can be disposed of together with the organic material of the beverage. Vice versa, the sealing film of the cup-shaped body has some functionality problems that make the replacement of a classic weldable aluminium foil difficult: in fact, the double need of having a material which is easy to weld and seal to the cup-shaped body, as well as sufficiently fragile to be broken by the pressure for the extraction of the beverage, has made the use of alternative materials difficult so far. In brief, the correct balance between stiffness and resilience of the various components of the film is very critical for its effectiveness during the use in a capsule for extraction of substances since it must ensure hermetic sealing, but must also be able to break with the operating pressures of the extraction machines.

WO2015177591 relates to a solution for a sealing film of a beverage capsule, which is composed of compostable materials, in particular based on PLA and cellulose. In this document various embodiments are proposed, but basically the sealing film comprises at least three functionally different layers laminated to each other: a first carrier layer in the form of a continuous film of PLA or cellulose, optionally coupled to a thin filtering layer of non-woven fabric, which is used to weld the film to the cup-shaped body of the capsule, a second intermediate oxygen barrier layer based on PVOH-, PVP- or PVAc and a third outer protection layer of the cellulose-based barrier. The support function is carried out by the internal layer based on a continuous PLA film which, for this purpose, has a thickness of the order of 20-50µm. The other layers are thinner and, therefore, are structurally dependent on the internal carrier.

Such configuration per se is very difficult to break with the pressures involved in the extraction machines. Therefore, this document teaches to provide weakened areas on the internal carrier layer, in particular by piercing micro-holes or micro-incisions with laser devices. This constructive mode is therefore expensive, due to the laser process, and also complex, because it requires to weaken the carrier layer before applying it and laminating it to the other layers. Moreover, this processing is very critical, because the depth of the incisions cannot be precisely determined. The resulting final product has not proved to be satisfactory.

Document WO2015/121489 discloses a further capsule structure obtained with biodegradable material. In this case, it is provided that the cover is comprised of a film made of non-woven PLA-based fabric. However, no particular laminate structure which is effective as a barrier and, at the same time, can be easily torn with the simple application of pressure, is suggested.

WO2015/162632 discloses a biodegradable and compostable capsule comprising a shell closed through a membrane, which is a single layer and is made of a material comprising a biodegradable and compostable polymer (like PLA), or a mixture of biodegradable and compostable polymers, and a percentage of fillers included between 15% and 90%. Optionally said single layer is coupled with barrier layer.

### Summary of the invention

The problem underlying the invention is therefore to propose a compostable and weldable film for a capsule for the extraction of substances, such as beverages, which overcomes the drawbacks of the prior art. In particular, it is intended to provide a layered film which is optimized to be weldable to the material of the cup-shaped body of the capsule, which results in a good seal and barrier to oxygen/external atmosphere and, above all, which is easily breakable (rupturable) - with the typical operating pressures and even without the intervention of piercing elements - without requiring complex or expensive treatments or processing.

These objects are achieved by the features mentioned in claims 1 and 5. The dependent claims describe preferred features of the invention.

In particular, provided herein is a breakable film for the sealing of a capsule for extractable substances, consisting of at least one carrier layer of non-woven PLA-based fabric and a gas-barrier layer, mutually coupled, wherein
said carrier layer is composed of a non-woven fabric of a plastic weldable and compostable material
said barrier layer is composed of a cellulose-based core layer on the outer surfaces of which there are provided thin protective coatings, obtained by deposition of a varnish, based on PVdc, PVOH, silica or aluminium oxides or a metallisation of metal aluminium, and
said carrier layer and said barrier layer are mutually coupled with adhesive.

According to a preferred aspect, the carrier layer of non-woven PLA-based fabric has a weight of 15-25 g/sqm.

Moreover, preferably, the core layer has a thickness of 17-23µm, while the two protective coatings have a thickness of the order of 1 µm.

According to another aspect, the adhesive is the amount of 1.5-4g/sqm.

According to a further aspect, a compostable capsule for pressure extractable beverages is provided, comprising a cup-shaped body made of PLA-based material or other similar plastic materials, closed by a compostable sealing film as described above.

### Brief description of the drawings

Further features and advantages of the invention will anyhow be more evident from the following detailed description of a preferred embodiment, given by mere way of non-limiting example and illustrated in the accompanying drawings, wherein:
Fig. 1 is a cross-sectional view of a film according to a preferred embodiment of the invention; and
Fig. 2 is a schematic view of an exemplary capsule on which the film according to the invention is applied.

### Detailed description of some preferred embodiments

According to the invention a composite film P of simple structure is provided, suitable to be welded on the perimeter of the mouth rim of a capsule, in particular on the mouth rim of a cup-shaped body T of PLA-based material or other similar plastic materials or related compounds.

In the description below, for sake of simplicity, reference will be made to a capsule for the extraction of beverages, e.g. coffee, but it is understood that the capsule can also contain other types of extractable substances.

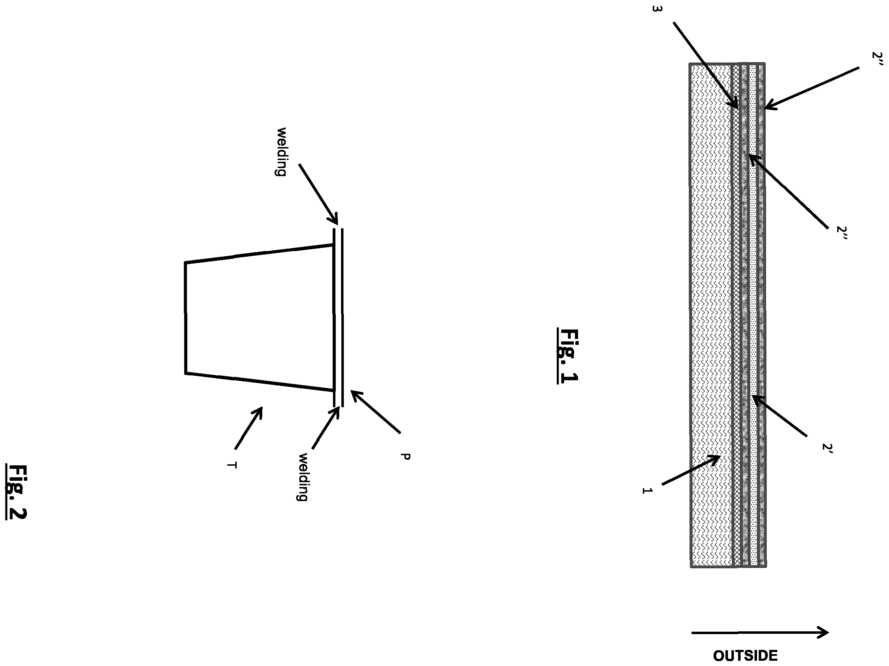

Fig. 1 shows the design of the film layered by coupling or lamination. It consists of only two main components, a first carrier layer 1 based on non-woven PLA fabric and a second layer 2 - appropriately configured - which acts as a barrier for gases and aromas.

Both components have their own consistency, which does not require further contributions from other cooperating elements to perform their function.

The first carrier layer 1 has a thickness suitable to act, at the same time, as a filtering element (i.e. to hinder the passage of the infusion material particles, which would otherwise come out from the capsule through the tearing of the film) and as a welding support to the cup-shaped body of the capsule. It is therefore on one side of the film intended to be directed towards the inside of the capsule and it is welded to the perimeter edge of the cup-shaped body of the capsule by techniques known per se (e.g. by ultrasound techniques or with heated elements). It is advantageously composed of a non-woven, robust PLA-based fabric, i.e., having a weight of 15-25 g/sqm which produces, under standard production conditions, a thickness of about 75-110µm (thickness that could vary significantly according to the manufacturing pressures of such a non-woven fabric).

Non-woven fabrics having a greater weight have proven to be inadequate to achieve an effective welding, thus provide worse results also in terms of hermetic sealing.

The second barrier layer 2 is advantageously composed, in turn, of a thin care layer 2' of cellulose-based oxygen barrier and two very thin outer coatings 2", which act as a protection against the moisture of the cellulose layer, in particular two varnish coatings of PVdC, PVOH, silica or aluminium oxides or a metallisation based on metal aluminium. The cellulose barrier layer has a thickness of the order of 17-23µm, while the two protection coatings have thicknesses of the order of 1 µm or preferably less.

The thicknesses thus identified are the optimal ones that have been identified after extensive experimentation on the various combinations of thicknesses and materials and that have provided a real operational effectiveness. Greater thicknesses do not allow the film to be adequately broken (especially in the case of an action by a pressure inside the capsule); smaller thicknesses of the intermediate layer produce an excessive tearing (i.e. overly wide openings in the cover film) during the application of pressure inside the capsule, to the detriment of the quality of the extracted drink.

The adhesion of the two outer coatings 2" to the core layer 2' takes place during the application process of varnish or the deposition of the metallisation material. This barrier layer 2 thus configured has a reduced thickness and is rigid enough to be easily piercing when exposed to working pressures or to the perforating elements existing in the beverage extraction machines.

Since the carrier layer 1 is made of non-woven fabric, by definition the liquid substance or beverage can pass through it, which, at the same time, acts as filtering element.

The final film is obtained by coupling the carrier layer 1 with the barrier layer 2 by interposing a, preferably compostable, adhesive 3 of suitable quality, e.g., casein-based glues, in an amount of the order of 1.5-4g/sqm. It should also be noted that the low amount of adhesive required in the film - typically less than 1% by weight - causes the nature of the adhesive to be substantially irrelevant for the purposes of compostability of the capsule as a whole.

The film thus optimized has proved to be excellent for the purpose set out in the introduction. The simplicity of the coupling or lamination process between two layers and the few essential layers, make the product cost-effective and manufacturable without complex equipment. The particular composition and the thicknesses identified make the welding of the laminate to the cup-shaped body of the capsule and, therefore, the perfect sealing of the latter, very easy. The inner carrier layer 1 also acts as filtering element, while the outer barrier layer has features such as to make it perfectly functional in terms of sealing from the external atmosphere and equally effective in breaking (rupturing) under pressure.

The film P according to the invention is intended to be applied to the mouth rim of a cup-shaped body T of a capsule (Fig. 2), after having filled it with the granular material to be extracted - e.g. ground coffee, tea or any other edible substance (lyophilized broth, milk powder, scented essences, drugs and more) - so as to seal it for storage until the extraction in a dispensing machine.

In the dispensing machine, an extraction liquid (typically hot water) is injected into the capsule, which then comes out through the breakable film. The breakage of the film according to the invention can be obtained by simple pressure of the liquid from the inside of the capsule or by the aid of piercing elements acting from the outside.

It is however understood that the invention is not limited to the particular configuration illustrated above, which represents a non-limiting example of its scope, but that a number of variants are possible, all within the reach of a person skilled in the art, which maintain the same effectiveness without thereby departing from the scope of protection of the invention which is defined by the appended claims.

## Claims

1. Rupturable film for the sealing of a capsule for extractable substances, consisting of at least one carrier layer (1) of non-woven PLA-based fabric and a gas-barrier layer (2), mutually coupled, **characterised in that**
said carrier layer (1) is composed of a non-woven fabric of a plastic weldable and compostable material,
said barrier layer (2) is comprised of a cellulose-based core layer (2') on the outer surfaces of which there are provided thin protective coatings (2"), obtained by deposition of a varnish based on PVdc, PVOH, silica or aluminium oxides or a metallisation of metal aluminium,
said carrier layer (1) and said barrier layer (2) being mutually coupled with adhesive (3).

2. Film as in claim 1, wherein said carrier layer of non-woven PLA-based fabric (1) has a weight of 15-25 g/sqm.

3. Film as in claim 1 or 2, wherein said core layer (2') has a thickness of 17-23µm, while the two protective coatings (2") have a thickness of the order of 1 µm.

4. Film as in any one of the preceding claims, wherein said adhesive (3) is in the amount of 1.5-4g/sqm.

5. Compostable capsule for pressure extractable beverages, comprising a cup-shaped body made of PLA-based material or other similar plastic materials, closed by a compostable sealing film as in any one of the preceding claims.

## Patentansprüche

1. Zerreißbare Folie zum Verschließen einer Kapsel für extrahierbare Substanzen, die aus mindestens einer Trägerschicht (1) aus Vliesstoff auf Basis von PLA und einer Gasbarriereschicht (2) besteht, die miteinander gekoppelt sind,
**dadurch gekennzeichnet, dass** die Trägerschicht (1) aus einem Vliesstoff aus einem kunststoffschweißbaren und kompostierbaren Material besteht,
die Barriereschicht (2) aus einer Kernschicht (2') auf Basis von Cellulose besteht, auf deren Außenflächen dünne Schutzbeschichtungen (2") vorgesehen sind, die durch Abscheidung eines Lacks auf der Basis von PVdC, PVOH, Siliziumdioxid oder Aluminiumoxiden oder einer Metallisierung von metallischem Aluminium erhalten werden,
wobei die Trägerschicht (1) und die Barriereschicht (2) mit Klebstoff (3) miteinander verbunden sind.

2. Folie nach Anspruch 1, bei der die Trägerschicht (1) aus Vliesstoff auf Basis von PLA ein Gewicht von 15-25 g/m² aufweist.

3. Folie nach Anspruch 1 oder 2, bei der die Kernschicht (2') eine Dicke von 17-23 µm aufweist, während die beiden Schutzschichten (2") eine Dicke in der Größenordnung von 1 µm aufweisen.

4. Folie nach einem der vorhergehenden Ansprüche, bei der der Klebstoff (3) in der Menge von 1,5-4 g/m² vorliegt.

5. Kompostierbare Kapsel für druckextrahierbare Getränke, die einen becherförmigen Körper aus Material auf Basis von PLA oder anderen ähnlichen Kunststoffmaterialien, verschlossen durch eine kompostierbare Verschlussfolie nach einem der vorhergehenden Ansprüche, umfasst.

## Revendications

1. Film déchirable pour le scellage d'une capsule pour substances extractibles, consistant en au moins une couche de support (1) ou de tissu à base de PLA non tissé et une couche barrière contre les gaz (2), couplées mutuellement, **caractérisé en ce que**
ladite couche de support (1) est composée d'un tissu non tissé d'une matière plastique soudable et compostable,
ladite couche barrière (2) comprend une couche centrale à base de cellulose (2') sur les surfaces extérieures de laquelle sont prévus de minces revêtements protecteurs (2"), obtenus par dépôt d'un vernis à base de PVdc, de PVOH, de silice ou d'oxydes d'aluminium ou une métallisation de métal aluminium,
ladite couche de support (1) et ladite couche barrière (2) étant couplées mutuellement avec un adhésif (3).

2. Film comme dans la revendication 1, dans lequel ladite couche de support de tissu à base de PLA non tissé (1) a un poids de 15-25 g/m².

3. Film comme dans la revendication 1 ou 2, dans lequel ladite couche centrale (2') a une épaisseur de 17-23 µm, tandis que les deux revêtements protecteurs (2") ont une épaisseur de l'ordre de 1 µm.

4. Film comme dans l'une quelconque des revendications précédentes, dans lequel ledit adhésif (3) est dans la quantité de 1,5-4 g/m².

5. Capsule compostable pour des boissons extractibles par pression, comprenant un corps en forme de godet fait de matériau à base de PLA ou d'autres matières plastiques similaires, fermée par un film de scellage compostable comme dans l'une quelconque des revendications précédentes.
